Europäisches Patentamt

European Patent Office

Office européen des brevets

(19)

(11) **EP 1 309 938 B1**

(12) **FASCICULE DE BREVET EUROPEEN**

(45) Date de publication et mention
de la délivrance du brevet:
**03.11.2004 Bulletin 2004/45**

(51) Int Cl.⁷: **G06K 7/00**, G06K 7/08,
G06K 7/10

(21) Numéro de dépôt: **01963102.7**

(22) Date de dépôt: **16.08.2001**

(86) Numéro de dépôt international:
**PCT/FR2001/002621**

(87) Numéro de publication internationale:
**WO 2002/015116 (21.02.2002 Gazette 2002/08)**

(54) **ANTENNE DE GENERATION D'UN CHAMP ELECTROMAGNETIQUE POUR TRANSPONDEUR**

ANTENNE ZUM ERZEUGEN EINES ELEKTROMAGNETFELDES FÜR TRANSPONDER

ANTENNA GENERATING AN ELECTROMAGNETIC FIELD FOR TRANSPONDER

(84) Etats contractants désignés:
**DE FR GB IT**

(30) Priorité: **17.08.2000 FR 0010699**

(43) Date de publication de la demande:
**14.05.2003 Bulletin 2003/20**

(73) Titulaire: **STMicroelectronics S.A.**
**92120 Montrouge (FR)**

(72) Inventeurs:
• **WUIDART, Luc**
**F-83910 Pourrières (FR)**
• **BARDOUILLET, Michel**
**F-13790 Rousset (FR)**

(74) Mandataire: **de Beaumont, Michel**
**Cabinet Michel de Beaumont**
**1, rue Champollion**
**38000 Grenoble (FR)**

(56) Documents cités:
**EP-A- 0 333 388          WO-A-97/49076**

# Description

La présente invention concerne des systèmes utilisant des transpondeurs électromagnétiques, c'est-à-dire des émetteurs-récepteurs (généralement mobiles) susceptibles d'être interrogés, sans contact et sans fil, par une unité (généralement fixe) dite borne de lecture et/ou d'écriture. Généralement, les transpondeurs extraient l'alimentation nécessaire aux circuits électroniques qu'ils comportent d'un champ haute fréquence rayonné par une antenne de la borne de lecture-écriture. La présente invention concerne plus particulièrement une borne de lecture et/ou d'écriture de transpondeurs électromagnétiques ainsi que l'antenne qu'elle comporte.

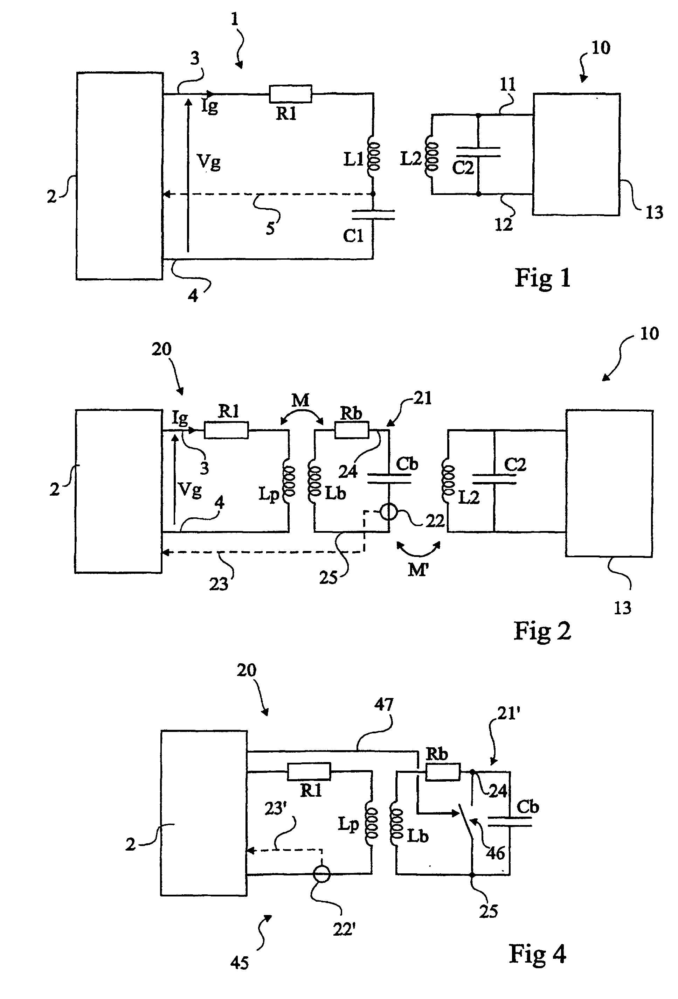

La figure 1 représente, de façon très schématique et simplifiée, un exemple classique de borne 1 de lecture-écriture associée à un transpondeur 10.

Généralement, la borne 1 est essentiellement constituée d'un circuit oscillant série, formé d'une inductance L1 en série avec un condensateur C1 et une résistance R1. Ce circuit oscillant est commandé par un dispositif 2 comprenant, entre autres et de façon non-limitative, un amplificateur ou coupleur d'antenne, et un circuit de commande et d'exploitation des données reçues pourvu, notamment, d'un modulateur/démodulateur et d'un microprocesseur de traitement des commandes et des données. Le circuit oscillant est excité par une tension Vg fournie par le dispositif 2 entre des bornes 3 et 4. Le circuit 2 communique généralement avec différents circuits d'entrée/sortie (clavier, écran, moyen d'échange avec un serveur, etc.) et/ou de traitement non représentés. Les circuits de la borne de lecture-écriture tirent l'énergie nécessaire à leur fonctionnement d'un circuit d'alimentation (non représenté) raccordé, par exemple, au réseau de distribution électrique.

Un transpondeur 10, destiné à coopérer avec une borne 1, comporte essentiellement un circuit oscillant parallèle. Ce circuit est formé d'une inductance L2 en parallèle avec un condensateur C2 entre deux bornes 11, 12 d'entrée d'un circuit 13 de commande et de traitement. Les bornes 11 et 12 sont, en pratique, reliées à l'entrée d'un moyen de redressement (non représenté) dont les sorties constituent des bornes d'alimentation continue des circuits internes au transpondeur 10. Ces circuits comprennent généralement, essentiellement, un microprocesseur, une mémoire, un démodulateur des signaux éventuellement reçus de la borne 1, et un modulateur pour transmettre des informations à la borne.

Les circuits oscillants de la borne et du transpondeur sont généralement accordés sur une même fréquence correspondant à la fréquence du signal d'excitation Vg du circuit oscillant de la borne. Ce signal haute fréquence (par exemple, 13,56 MHz) sert non seulement de porteuse de transmission de données de la borne vers le transpondeur, mais également de porteuse de télé-alimentation à destination des transpondeurs se trouvant dans le champ de la borne. Quand un transpondeur 10 se trouve dans le champ d'une borne 1, une tension haute fréquence est engendrée aux bornes 11 et 12 du circuit résonnant du transpondeur. Cette tension, après redressement et écrêtement éventuel, fournit la tension d'alimentation des circuits électroniques 13 du transpondeur.

La porteuse haute fréquence émise par la borne est généralement modulée en amplitude par celle-ci selon différentes techniques de codage afin de transmettre des données et/ou des commandes à un ou plusieurs transpondeurs dans le champ. En retour, la transmission des données du transpondeur vers une borne s'effectue généralement en modulant la charge constituée par le circuit résonnant L2, C2. Cette variation de charge s'effectue au rythme d'une sous-porteuse de fréquence (par exemple, 847,5 kHz) inférieure à celle de la porteuse. Cette variation de charge peut alors être détectée par la borne sous la forme d'une variation d'amplitude ou d'une variation de phase au moyen, par exemple, d'une mesure de la tension aux bornes du condensateur C1 ou du courant Ig dans le circuit oscillant. En figure 1, le signal de mesure a été symbolisé par une liaison 5 en pointillés reliant le point milieu entre l'inductance L1 et le condensateur C1 au circuit 2.

Un problème qui se pose dans les systèmes à transpondeur classiques est qu'ils sont généralement de portée limitée. La portée du système' correspond à la distance limite au-delà de laquelle le champ capté par un transpondeur est trop faible pour lui permettre d'en extraire l'énergie nécessaire à son fonctionnement. La portée limitée est essentiellement due au champ magnétique maximal admissible qui est fixé par des normes. Classiquement, pour augmenter la portée, on cherche à augmenter le diamètre de l'antenne afin de ne pas dépasser ce champ magnétique maximal autorisé. Or, augmenter le diamètre revient à augmenter le courant d'excitation Ig dans des proportions qui ne sont pas souhaitables, entre autres, pour des raisons de consommation.

Le document WO-A-97/49076 décrit une antenne de génération d'un champ électromagnétique pour transpondeur comprenant deux éléments inductifs (voir le préambule de la revendication 1).

Un objet de la présente invention est d'améliorer la portée des bornes de lecture-écriture des transpondeurs électromagnétiques.

La présente invention vise plus particulièrement à proposer une nouvelle antenne de génération d'un champ électromagnétique de portée élevée.

L'invention vise également à ne nécessiter aucune modification des transpondeurs et, par conséquent, à pouvoir fonctionner avec n'importe quel transpondeur classique.

La présente invention vise également à minimiser la consommation de la borne.

Pour atteindre ces objets, la présente invention prévoit une antenne de génération d'un champ électromagnétique pour transpondeur électromagnétique, comportant un premier élément inductif destiné à être connecté à deux bornes d'application d'une tension d'excitation, et un circuit résonnant parallèle couplé avec le premier élément inductif.

Selon la présente invention, ledit circuit résonnant comporte un deuxième élément inductif dont la valeur est choisie pour être supérieure à la valeur du premier élément inductif avec un rapport fonction d'une amplification de champ souhaitée.

Selon un mode de réalisation de la présente invention, le premier élément inductif est constitué de plusieurs inductances associées en réseau.

Selon un mode de réalisation de la présente invention, le ou les éléments inductifs sont constitués d'enroulements plans.

Selon un mode de réalisation de la présente invention, les deux éléments inductifs sont dans des plans parallèles.

Selon un mode de réalisation de la présente invention, la distance qui sépare les plans respectifs des éléments inductifs est choisie en fonction de la consommation des transpondeurs auxquels l'antenne est destinée et de la portée souhaitée.

La présente invention prévoit également une borne de génération d'un champ électromagnétique haute fréquence à destination d'au moins un transpondeur entrant dans ce champ, la borne comportant une antenne selon la présente invention.

Selon un mode de réalisation de la présente invention, le circuit résonnant est constitué d'un deuxième élément inductif et d'un élément capacitif en parallèle, et est accordé sur la fréquence d'un signal d'excitation du premier élément inductif.

Selon un mode de réalisation de la présente invention, ledit circuit résonnant comporte un interrupteur de commande.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1, décrite précédemment, représente un exemple classique de système à transpondeur du type auquel s'applique la présente invention ;
la figure 2 représente, de façon très schématique et simplifiée, un premier mode de réalisation d'une borne de lecture et/ou d'écriture, pourvue d'une antenne selon la présente invention, et associée à un transpondeur classique ;
les figures 3A et 3B représentent une antenne selon un deuxième mode de réalisation de l'invention ; et
la figure 4 représente une variante de réalisation d'une borne selon la présente invention.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, les constitutions internes des circuits électroniques d'un transpondeur et d'une borne de lecture et/ou d'écriture n'ont pas été détaillées et ne font pas l'objet de la présente invention.

Une caractéristique de la présente invention est de prévoir l'antenne d'une borne de lecture et/ou d'écriture sous la forme d'un circuit LR couplé à un circuit résonnant LC. Selon l'invention, le circuit LR est excité par le générateur haute fréquence de la borne. La fréquence d'excitation est, de façon classique, celle de la porteuse de télé-alimentation et des données éventuelles à transmettre. Le circuit résonnant constitue un circuit bouchon formé d'une inductance et d'un condensateur. Il s'agit en pratique d'un circuit RLC avec une résistance la plus faible possible correspondant aux résistances série de l'inductance et du condensateur.

Une autre caractéristique de la présente invention est de prévoir une valeur d'inductance du circuit bouchon supérieure à celle du circuit LR d'excitation. Ainsi, la tension développée aux bornes du condensateur du circuit bouchon est supérieure à la tension d'excitation du circuit LR. Selon l'invention, on cherche à maximiser le facteur de qualité du circuit bouchon de façon à favoriser l'amplification réalisée par son couplage avec le circuit LR d'excitation. Le facteur de qualité est inversement proportionnel à la somme des résistances série et à la racine carrée du condensateur du circuit bouchon, et directement proportionnel à la racine carrée de son inductance. Par conséquent, on cherche à maximiser l'inductance et à minimiser les résistances série et le condensateur.

La figure 2 représente, de façon très schématique et simplifiée, un premier mode de réalisation d'une borne de lecture et/ou d'écriture selon l'invention.

De façon classique, une borne 20 selon l'invention comporte des circuits 2 de traitement, de commande et d'analyse des données à échanger avec un transpondeur 10 également classique. Une tension vg haute fréquence servant de porteuse de télé-alimentation et/ou de porteuse de modulation de données à destination d'un transpondeur est fournie entre des bornes 3 et 4 de sortie du circuit 2. Selon l'invention, ces bornes 3 et 4 sont reliées à un circuit LR série constitué d'une résistance R1 en série avec une inductance Lp. L'inductance Lp est destinée à être couplée avec une inductance Lb d'un circuit bouchon 21 associé au circuit LR. Le circuit 21 comprend également un condensateur Cb dont les deux électrodes sont respectivement reliées aux deux bornes 24 et 25 de l'inductance Lb. Selon l'invention, le circuit inductif LR, connecté aux bornes 3 et 4 du circuit 2, est dépourvu de condensateur. Ainsi, il n'y a pas d'accord du circuit d'excitation sur la fréquence de la porteuse de télé-alimentation. Selon l'invention, cet accord est reporté dans le circuit bouchon 21. Pour ce dernier, les valeurs respectives de l'inductance Lb et du condensateur Cb sont choisies pour que la fréquence de résonance de ce circuit corresponde à la porteuse de télé-alimentation du système (par exemple 13,56 MHz) .

Selon l'invention, les inductances Lp et Lb sont, de préférence, réalisées sous forme d'inductances planes d'une ou plusieurs spires. Ces inductances sont placées dans des plans parallèles afin de maximiser le couplage magnétique entre elles. Ce couplage est symbolisé en figure 2 par la mutuelle inductance M entre les circuits LR et LC. Côté transpondeur 10, il s'agit d'un transpondeur classique, l'invention ne nécessitant aucune modification du transpondeur pour sa mise en oeuvre. Quand un transpondeur 10 se trouve dans le champ de l'antenne, celui-ci se trouve en couplage magnétique (mutuelle inductance M') avec le circuit bouchon d'où il prélève l'énergie nécessaire à son fonctionnement.

Le fait de placer un transpondeur dans le champ de l'antenne revient à augmenter la résistance série du circuit bouchon 21, donc réduit son facteur de qualité et le courant qui y circule. Cela entraîne une consommation côté circuit d'excitation R1-Lp. Toutefois, le générateur de la borne peut se contenter de fournir un courant d'entretien au circuit bouchon où le courant et la tension sont naturellement élevés.

L'inductance Lp est choisie pour être la plus faible possible afin d'optimiser le rendement du système et de maximiser l'utilisation de la puissance installée du générateur fournissant la tension Vg. La valeur de l'inductance Lb du circuit bouchon 21 est choisie pour être la plus forte possible afin de maximiser la portée du système. En effet, plus le rapport Lb/Lp est grand, plus le rapport entre la tension développée aux bornes du condensateur Cb et la tension Vg est important.

Selon un mode de réalisation préféré de l'invention, l'écart entre les inductances planes, disposées dans des plans parallèles, est adapté aux transpondeurs auxquels est destinée la borne. Selon le niveau de charge représenté par différents transpondeurs (en particulier, selon qu'ils comportent ou non un microprocesseur) et selon la portée désirée, on pourra optimiser le couplage entre les circuits d'excitation et bouchon. Dans le cas de transpondeurs à faible consommation et où l'on souhaite une portée élevée, on écartera les inductances de l'antenne pour maximiser la surtension produite aux bornes du circuit bouchon. Par exemple, on choisira un écart compris entre environ 0,5 cm et quelques centimètres. A l'inverse, pour des transpondeurs à plus forte consommation, il faut maximiser le couplage entre les inductances afin que la charge représentée par les transpondeurs ne dégrade pas trop le facteur de qualité du circuit bouchon. On place alors les inductances de l'antenne le plus près possible l'une de l'autre. L'écart dépend bien entendu, entre autres, du diamètre des inductances et du coefficient de qualité du circuit bouchon.

Un avantage de la présente invention est qu'elle permet d'accroître la portée d'une borne de lecture et/ou d'écriture pour une tension Vg et un courant Ig d'excitation donnés.

Un autre avantage de la présente invention est qu'elle ne nécessite aucune modification des transpondeurs existants.

La détection d'une rétromodulation provenant d'un transpondeur peut être effectuée soit sur le circuit LR soit dans le circuit LC 21. Dans le mode de réalisation de la figure 2, on a symbolisé un transformateur d'intensité 22 dont le rôle est de mesurer l'intensité dans le circuit bouchon 21. Une liaison 23 fournit le résultat de cette mesure au circuit 2. En variante, la mesure pourra être effectuée dans le circuit LR. Toutefois, il est plus facile de détecter des variations dans le circuit bouchon où les niveaux des signaux sont les plus élevés. On veillera cependant à ce que cette mesure perturbe le moins possible le facteur de qualité du circuit bouchon. Par exemple, si on effectue une mesure de tension aux bornes du condensateur Cb, on veillera à utiliser un élément de mesure à impédance d'entrée élevée.

L'invention permet d'augmenter le champ magnétique émis sans augmenter ni le courant fournit par le générateur, ni la tension Vg, donc sans augmenter la puissance installée de la borne. Pour une même borne avec une puissance installée donnée, l'invention permet d'utiliser des antennes de grandes tailles facilement, ce qui est difficile avec des bornes classiques sans augmenter la tension du générateur afin de fournir le courant suffisant.

Un autre avantage de la présente invention est qu'elle facilite l'adaptation d'impédance de l'antenne par rapport au circuit de commande 2. En effet, l'impédance Zpeq vue par le générateur (circuit 2) fournissant le signal d'excitation haute fréquence peut s'écrire de manière générale :

$$Zpeq = Rp + j \cdot Xp,$$

où Rp représente la partie réelle suivante :

$$Rp = \frac{\omega^2 \cdot k_{pb}^2 \cdot Lp \cdot Lb}{Rb},$$

et
où Xp représente la partie imaginaire suivante :

$$Xp = \omega \cdot Lp,$$

avec $k_{pb}$ représentant le coefficient de couplage magnétique entre les circuits d'excitation et bouchon, et Rb représentant la résistance équivalente du circuit 21 (somme des résistances parasites du condensateur Cb et de l'inductance Lb). Dans la partie réelle Rp, on n'a pas tenu compte de la résistance R1 qui correspond en pratique à la résistance de sortie du générateur d'excitation. On a de plus négligé la résistance série de l'inductance Lp. La prise en compte de ces éléments résistifs revient simplement à ajouter leurs valeurs respectives à la résistance Rb indiquée ci-dessus.

Pour adapter l'impédance de l'antenne, on peut par exemple modifier le rapport entre les inductances Lb et Lp, ou introduire une résistance en parallèle dans le circuit 21.

En outre, la partie imaginaire xp de l'impédance Zpeq est fonction de l'inductance Lp qui est minimisée. Par conséquent, l'impédance peut, en première approximation, être considérée comme purement résistive. Il est ainsi particulièrement aisé, d'obtenir une adaptation d'impédance (par exemple, à 50Ω) à vide. Un avantage est alors que l'on peut facilement déporter l'antenne de la borne de lecture-écriture par rapport à ses circuits de commande. Un câble d'impédance adaptée 50Ω suffit. Bien sûr, quand un transpondeur se trouve dans le champ, il intervient sur l'impédance vue par le générateur (au dénominateur de la partie réelle).

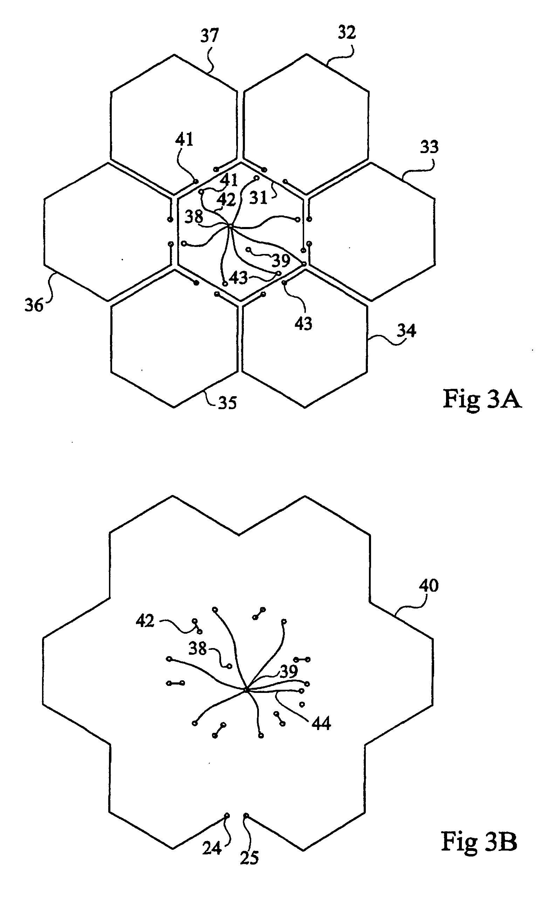

Les figures 3A et 3B représentent les deux côtés d'une antenne selon un mode de réalisation préféré de l'invention. Selon ce mode de réalisation préféré, l'élément inductif Lp d'excitation est constitué de plusieurs inductances 31, 32, 33, 34, 35, 36 et 37 en réseau, c'est-à-dire électriquement en parallèle. Les inductances 31, 32, 33, 34, 35, 36 et 37 sont coplanaires. Les inductances sont, de préférence, réparties en nid d'abeilles. Chaque inductance 31, 32, 33, 34, 35, 36, 37 comporte, par exemple, une seule spire hexagonale. Le nombre de spires de ces inductances pourra être adapté à la valeur souhaitée pour l'élément inductif résultant Lp. Les deux bornes 38 et 39 d'interconnexion des bornes respectives des inductances 31 à 37 constituent les bornes de l'élément Lp. Les inductances sont par exemple réalisées par des dépôts de pistes conductrices sur une plaquette de circuit imprimé. une première extrémité de chaque inductance est reliée à la borne 38. Cette liaison s'effectue par l'intermédiaire de vias 41 et de pistes conductrices 42 des deux faces de la plaquette (figures 3A et 3B). La deuxième extrémité de chaque inductance est reliée à la borne 39 par l'intermédiaire de vias 43 et de pistes 44.

L'association des inductances en réseau doit être telle que toutes les inductances du réseau génèrent des champs dont les lignes s'additionnent (sont toutes dans le même sens).

L'inductance Lb est réalisée sur la deuxième face de la plaquette. Dans ce mode de réalisation préféré, cette inductance est constituée d'une seule spire 40 délimitant approximativement une surface équivalente à celle de l'ensemble des spires en réseau de l'inductance Lp. Elle suit donc le contour externe du nid d'abeilles. Les bornes d'extrémité de la spire 40 définissent les bornes 24 et 25 de l'inductance Lb destinées à être connectées au condensateur Cb (non représenté).

Un avantage d'utiliser une inductance en réseau côté circuit LR est que l'on maximise le rapport de tension et de courant entre le circuit de bouchon et le circuit d'excitation. En effet, on accroît le rapport entre les inductances du circuit bouchon et du circuit d'excitation.

Un autre avantage d'utiliser des inductances en réseau dans le circuit d'excitation est que cela facilite encore l'adaptation d'impédance. En effet, on minimise la valeur de l'inductance Lp qui intervient dans la partie imaginaire de l'impédance du circuit d'excitation.

La figure 4 représente un autre mode de réalisation d'une borne 45 de lecture et/ou d'écriture selon l'invention. Ce mode de réalisation s'applique plus particulièrement à une borne destinée à fonctionner soit en couplage relativement lointain avec un transpondeur soit en couplage très proche avec celui-ci. En effet, dans certaines applications, on souhaite pouvoir n'échanger des informations entre un transpondeur et la borne que lorsque celui-ci se trouve très près de la borne. Ceci pour éviter qu'un dispositif pirate capte les échanges de données. Dans un tel cas, on est classiquement contraint, pour utiliser une seule borne, d'adapter les séquences d'échanges de données et d'effectuer des contrôles logiciels pour un fonctionnement en couplage très proche autorisé à un seul transpondeur.

La figure 4 illustre que la mise en oeuvre de l'invention facilite grandement un fonctionnement en hyperproximité d'une borne de lecture et/ou d'écriture. Pour cela, on prévoit un commutateur 46 dans le circuit bouchon 21'. Ce commutateur est placé en parallèle avec l'inductance Lb et est destiné à court-circuiter le circuit bouchon et, par conséquent, à supprimer le couplage avec le circuit LR d'excitation. Le commutateur 46 est commandé par le circuit 2, via une liaison 47.

Par exemple, quand on souhaite que la borne soit dédiée à un fonctionnement en hyperproximité, on ferme le commutateur 46. Dans ce cas, un transpondeur voulant échanger des données avec la borne doit se placer quasiment sur l'antenne de la borne pour obtenir un couplage magnétique avec l'inductance Lp. Plus la valeur de cette inductance est faible, plus il sera nécessaire que le transpondeur soit près de la borne. Le fonctionnement sera proche ici d'un fonctionnement en transformateur. Quand le commutateur 46 est ouvert, le circuit bouchon remplit son rôle et la portée de la borne de lecture et/ou d'écriture est maximale.

En variante, le commutateur est placé en série dans le circuit bouchon. Le fonctionnement est alors inversé et l'ouverture du commutateur ouvre le circuit bouchon. Dans cette variante, on veillera à ce que la résistance série du commutateur soit minimale.

Dans le mode de réalisation de la figure 4, on a illustré un transformateur d'intensité 22' en série avec l'inductance Lp et dont le signal de mesure 23' est envoyé au circuit 2. Ce transformateur d'intensité délivre une mesure du courant dans le circuit d'excitation. Une telle disposition est ici nécessaire au moins pour le fonctionnement en hyperproximité dans la mesure où une détection ne peut plus être effectuée par le circuit bouchon. Il est cependant possible de maintenir l'utilisation d'un système de mesure, côté circuit bouchon, quand la borne fonctionne en portée lointaine.

Bien entendu, la présente invention est susceptible de diverses variantes et modifications qui apparaîtront à l'homme de l'art. En particulier, les dimensionnements des différents constituants d'une borne de lecture et/ou d'écriture selon l'invention sont à la portée de l'homme du métier à partir des indications fonctionnelles données ci-dessus.

**Revendications**

1. Antenne de génération d'un champ électromagnétique pour transpondeur électromagnétique, comportant :

   un premier élément inductif (Lp) destiné à être connecté à deux bornes (3, 4) d'application d'une tension d'excitation (Vg) ; et
   un circuit résonnant parallèle (21, 21') couplé avec le premier élément inductif et comportant un deuxième élément inductif (Lb), **caractérisée en ce que** la valeur du deuxième élément inductif est choisie pour être supérieure à la valeur du premier élément inductif avec un rapport fonction d'une amplification de champ souhaitée.

2. Antenne selon la revendication 1, **caractérisée en ce que** le premier élément inductif (Lp) est constitué de plusieurs inductances (31, 32, 33, 34, 35, 36, 37) associées en réseau.

3. Antenne selon l'une quelconque des revendications 1 ou 2, **caractérisée en ce que** le ou les éléments inductifs (Lp, Lb) sont constitués d'enroulements plans.

4. Antenne selon la revendication 3, **caractérisée en ce que** les deux éléments inductifs (Lp, Lb) sont dans des plans parallèles.

5. Antenne selon la revendication 4, **caractérisée en ce que** la distance qui sépare les plans respectifs des éléments inductifs (Lp, Lb) est choisie en fonction de la consommation des transpondeurs auxquels l'antenne est destinée et de la portée souhaitée.

6. Borne (20, 45) de génération d'un champ électromagnétique haute fréquence à destination d'au moins un transpondeur (10) entrant dans ce champ, **caractérisée en ce qu'**elle comporte une antenne conforme à l'une quelconque des revendications 1 à 5.

7. Borne selon la revendication 6, **caractérisée en ce que** le circuit résonnant (21, 21') est constitué d'un deuxième élément inductif (Lb) et d'un élément capacitif (Cb) en parallèle, et est accordé sur la fréquence d'un signal (Vg) d'excitation du premier élément inductif (Lp).

8. Borne selon l'une quelconque des revendications 6 ou 7, **caractérisée en ce que** ledit circuit résonnant (21') comporte un interrupteur (46) de commande.

**Claims**

1. An antenna for generating an electromagnetic field for an electromagnetic transponder, including:

   a first inductive element (Lp) intended for being connected to two terminals (3, 4) of application of an excitation voltage (Vg); and
   a parallel resonant circuit (21, 21') coupled with the first inductive element, and including a second inductive element (Lb), **characterized in that** the value of the second inductive element is chosen to be greater than the value of the first inductive element with a ratio depending on a desired field amplification.

2. The antenna of claim 1, **characterized in that** the first inductive element (Lp) is formed of several inductances (31, 32, 33, 34, 35, 36, 37) organized in a network.

3. The antenna of claim 1 or 2, **characterized in that** the inductive element (s) (Lp, Lb) are formed of planar windings.

4. The antenna of claim 3, **characterized in that** the two inductive elements (Lp, Lb) are in parallel planes.

5. The antenna of claim 4, **characterized in that** the distance that separates the respective planes of the inductive elements (Lp, Lb) is chosen according to the power consumption of the transponders for which the antenna is intended and to the desired range.

6. A terminal (20, 45) for generating a high-frequency electromagnetic field for at least one transponder (10) entering this field, **characterized in that** it includes an antenna according to any of claims 1 to 5.

7. The terminal of claim 6, **characterized in that** the resonant circuit (21, 21') is formed of a second inductive element (Lb) and of a capacitive element (Cb) in parallel, and is tuned to the frequency of an excitation signal (Vg) of the first inductive element (Lp).

8. The terminal of claim 6 or 7, **characterized in that** said resonant circuit (21') includes a control switch (46).

**Patentansprüche**

1. Eine Antenne zum Erzeugen eines elektromagnetischen Feldes für einen elektromagnetischen Transponder, die folgendes aufweist:

   ein erstes induktives Element (Lp), zum Verbinden mit zwei Anschlüssen (3, 4) zum Anlegen einer Erregungs- bzw. Anregungsspannung (Vg) ; und
   ein Parallelschwingkreis bzw. Parallelresonanzkreis (21, 21'), der mit dem ersten induktiven Element gekoppelt ist und ein zweites induktives Element (Lb) aufweist, **gekennzeichnet dadurch, dass** der Wert des zweiten induktiven Elements größer als der Wert des ersten induktiven Elements gewählt wird und zwar in einem Verhältnis, das von einer gewünschten bzw. Soll-Feldverstärkung abhängt.

2. Antenne nach Anspruch 1, **dadurch gekennzeichnet, dass** das erste induktive Element (Lp) aus mehreren in einem Netzwerk organisierten Induktivitäten (31, 32, 33, 34, 35, 36, 37) gebildet wird.

3. Antenne nach Anspruch 1 oder 2, **dadurch gekennzeichnet, dass** das bzw. die induktiven Elemente (Lp, Lb) mittels planarer Windungen gebildet werden.

4. Antenne nach Anspruch 3, **dadurch gekennzeichnet, dass** die zwei induktiven Elemente (Lp, Lb) in parallelen Ebenen sind bzw. liegen.

5. Antenne nach Anspruch 4, **dadurch gekennzeichnet, dass** der Abstand der die entsprechenden Ebenen der induktiven Elemente (Lp, Lb) trennt gemäß der Leistungsaufnahme bzw. dem Leistungsverbrauch der Transponder für die die Antenne gedacht ist und gemäß der gewünschten Reichweite gewählt wird.

6. Ein Endgerät (20, 45) zum Erzeugen eines hochfrequenten elektromagnetischen Feldes für wenigstens einen Transponder (10), der in dieses Feld eintritt, **dadurch gekennzeichnet, dass** es eine Antenne gemäß einem der Ansprüche 1-5 aufweist.

7. Ein Endgerät nach Anspruch 6, **dadurch gekenn-** zeichnet, **dass** der Schwingkreis (21, 21') durch ein zweites induktives Element (Lb) und ein parallel geschaltetes kapazitives Element (Cb) gebildet wird und auf die Frequenz eines Erregungs- bzw. Anregungssignals (Vg) des ersten induktiven Elements (Lp) abgestimmt wird.

8. Endgerät gemäß Anspruch 6 oder 7, **dadurch gekennzeichnet, dass** der Schwingkreis (21') einen Steuerschalter (46) aufweist.

Fig 1

Fig 2

Fig 4

Fig 3A

Fig 3B